# EUROPÄISCHE PATENTANMELDUNG

(11) **EP 4 644 845 A1**
(43) Veröffentlichungstag der Anmeldung: **05.11.2025**
(21) Anmeldenummer: 24173106.6
(22) Anmeldetag: 29.04.2024
(51) Int. Cl.: G01F 1/66, G01F 15/14, G01F 1/667

(54) **DURCHFLUSSMESSER**

(71) Anmelder: GWF AG, 6005 Luzern (CH)
(72) Erfinder: Zbinden, Matthias, 4312 Magden (CH); Luong, Trung Dung, 6010 Kriens (CH); Nguyen, Hoang-Ha, Hanoi (VN); Thaddey, Sergio, 6043 Adligenswil (CH); Dr. Helfenstein, Markus, 6004 Luzern (CH)
(74) Vertreter: Winter, Brandl - Partnerschaft mbB

(57) **Zusammenfassung**

Offenbart ist ein Durchflussmesser (1) mit einem Messkanaleinsatz (28), der in Radialrichtung in einen Strömungskanal-Körper (2) eingesetzt ist, wobei zuvor in Axialrichtung ein Inlet-Insert (24) und/oder ein Outlet-Insert (26) eingesetzt ist.

## Beschreibung

Die Erfindung betrifft einen Durchflussmesser zur Messung des Durchflusses von Fluiden in einer Rohrleitung oder dergleichen gemäß dem Oberbegriff des Patentanspruches 1.

Durchflussmesser können beispielsweise zwei Ultraschall-Wandler aufweisen, die als so genannte "Clip-On-Lösung" im Abstand zueinander an ein Rohrstück der Rohrleitung angesetzt werden, wobei beide Wandler als Sender und Empfänger wirken. Die Messsignale werden schräg durch die Rohrstückwandung hindurch in das Fluid eingekoppelt.

Aus der Laufzeit der Messsignale vom Sender zum Empfänger kann dann in an sich bekannter Weise die Durchflussgeschwindigkeit bestimmt werden. Derartige Durchflussmesser sind beispielsweise in den Druckschriften WO 2004/036151 A1 und DE 10 2005 057 888 beschrieben.

Nachteilig bei den Clip-On-Durchflussmessern ist, dass die Messsignale die Wandung des Messkanals durchsetzen, so dass bei unterschiedlichen Materialien, aus denen der Messkanal ausgebildet sein kann, auch unterschiedliche Messsignale erhalten werden, so dass der Materialeinfluss bei der Messsignalauswertung berücksichtigt werden muss.

Weiterhin bekannt sind Lösungen mit einem Messeinsatz, in dem die Ultraschall-Wandler aufgenommen sind. Dieser Messeinsatz wird in eine Ausnehmung eines Rohrstückes/Messkanals eingesetzt, wobei der eigentliche Messkanal auch ein Teil dieses Messeinsatzes sein kann.

Eine derartige Lösung ist beispielsweise in der DE 101 20 355 A1 offenbart, wobei die beiden Ultraschall-Wandler in Fließrichtung im Abstand zueinander und an gegenüber liegende Seiten des Messkanals angeordnet sind.

In der EP 2 306 160 A1 ist ein Durchflussmesser/Durchflusszähler offenbart, bei dem der Messeinsatz sowohl die Ultraschall-Wandler aufnimmt als auch den eigentlichen Messkanal ausbildet. Dieser Messeinsatz wird an einem tangential verlaufenden Flansch eines Rohrstückes eines Gehäuses des Durchflussmessers befestigt. Dabei taucht durch eine von dem Flansch umgegriffene Ausnehmung des Rohrstückes ein den Messkanal ausbildender Profilkörper ein, der die Strömung innerhalb des Messbereiches beeinflusst und an dem zusätzlich Reflektoren für die Messsignale vorgesehen sind. Bei dieser Lösung sind die beiden Ultraschall-Wandler in einem topfförmigen Gehäuseteil des Messeinsatzes angeordnet, das zur Strömung hin geschlossen ist und in diese eintaucht.

Eine ähnliche Lösung ist in der EP 2 386 836 B1 gezeigt. Bei diesem Ausführungsbeispiel trägt der Messeinsatz zwei in Strömungsrichtung versetzt zueinander angeordnete Ultraschall-Wandler, die ebenfalls in einem topfförmigen Gehäuseteil aufgenommen sind und durch eine von einem Flansch umgriffene Öffnung eines Rohrstückes eines Gehäuses in den Messkanal hinein kragen. Die Strömungsführung innerhalb des Messkanals wird durch einen von der Stirnseite des Gehäuses her einsetzbaren Gehäuseeinsatz bestimmt, der auch Reflektoren für die Ultraschallsignale trägt, so dass der Ultraschall von einem der Ultraschall-Wandler abgegeben und über die Reflektoren zu dem anderen, beispielsweise stromabwärts gelegenen Ultraschall-Wandler reflektiert wird. Selbstverständlich kann die Signalführung auch in umgekehrter Richtung erfolgen.

In der Druckschrift EP 0 890 826 B1 ist ein Durchflussmesser beschrieben, bei dem ebenfalls im Bereich eines Rohrstückes eines Gehäuses ein Messeinsatz an einen tangential verlaufenden Flansch angesetzt wird. Der Messeinsatz trägt zwei Ultraschall-Wandler, die in Ausnehmungen eines Bodens eines Gehäuseteiles eingesetzt sind und dort mittels jeweils einer Dichtung abgedichtet sind. Der gesamte Messeinsatz wird dann gegenüber dem Flansch mit einer weiteren umlaufenden Dichtung abgedichtet, die beide Ultraschall-Wandler umgreift. Auch bei diesem Ausführungsbeispiel wird der Messkanal durch einen Messeinsatz ausgebildet, der durch die vom Flansch umgriffene Ausnehmung in das Rohrstück des Gehäuses eingesetzt wird. Einlass- und auslassseitig sind bei diesem Durchflussmesser zwei Inserts vorgesehen, die in entsprechende Aufnahmen des Durchflussmessergehäuses eingesetzt sind und dabei stirnseitig an Radialschultern des Gehäuses anliegen.

Die Druckschrift DE 199 44 411 A1 offenbart einen Durchflussmesser, bei dem in einem Messrohr ein Einsatz vorgesehen ist, durch den der Querschnitt des Messrohrs länglich ausgebildet ist. Dabei sind zwei Ultraschallwandler in Strömungsrichtung versetzt an den gegenüberliegenden Seiten des Messkanals angeordnet.

Die Druckschriften DE 20 2016 008 775 U1 und WO 2016/012 024 A1 und EP 3 172 539 B1 offenbaren jeweils Durchflussmesser, bei denen ein Messkanal durch einen etwa zylinderförmigen Einsatz ausgebildet ist, der axial in das Rohrstück des Gehäuses eingeschoben wird.

Durchflussmesser, bei denen ein Messeinsatz in Axialrichtung in einem Messkanal eingeschoben wird, haben den Nachteil, dass diese Messeinsätze in der Geometrie sehr begrenzt sind, da das axiale Einschieben voraussetzt, dass der Messeinsatz und der Messkanal ohne Hinterschneidungen ausgebildet sind. Zudem lassen sich Konifizierungen im Einlass- und Auslassbereich nur schwer oder allenfalls mit erheblicher Wandstärke des Messeinsatzes realisieren.

In der auf die Anmelderin zurückgehenden WO 2018/011 371 A1 wird ein Durchflussmesser beschrieben, bei dem die Ein- und Auskopplung von Messsignalen zweier zueinander beabstandeter Messsensoren über ein gemeinsames oder jeweils ein Koppelstück erfolgt, das den oder die Sensoren/Wandler trägt.

In der parallelen Patentanmeldung WO 2018/011 372 A1 wird ein Durchflussmesser mit einem ovalen oder trapezförmigen Messkanal beschrieben.

Beide Durchflussmesserkonzepte gewährleisten eine gegenüber dem vorgenannten Stand der Technik verbesserte Durchströmung des Durchflussmessers bei verbesserter Messgenauigkeit. Bei einem Ausführungsbeispiel dieser Durchflussmesser ist ebenfalls vorgesehen, einlass- und auslassseitig Inserts anzuordnen, über die die Fluidverbindung zum bzw. vom Messkanal vorgegeben ist. Diese Inserts sind wiederum in ein Gehäuse des Durchflussmessers eingesetzt.

In der Druckschrift WO 2022/079 213 A1 der Anmelderin ist eine Weiterbildung des vorbeschriebenen Konzepts offenbart, bei dem zunächst die Inserts in Radialrichtung durch eine Ausnehmung des Strömungskanals hindurch eingesetzt und dann in Axialrichtung in ihre vorbestimmte Endposition verschoben werden. Im Anschluss daran wird ein mehrteiliger Messkanaleinsatz ebenfalls in Radialrichtung durch die Ausnehmung hindurch eingesetzt, so dass dieser im Bereich zwischen den Inserts positioniert ist.

Ein derartiges Konzept lässt sich sehr vorteilhaft bei vergleichsweise geringen Nennweiten einsetzen. Bei größeren Nennweiten kann ein Problem dahingehend auftreten, dass zur Aufnahme der radial eingeführten Inserts und des mehrteiligen Messkanalgehäuses im Strömungskanal ein vergleichsweise großes Volumen bereitgestellt werden muss.

In der EP 2 888 560 A1 wird ein Durchflussmesser beschrieben, bei dem die beiden Ultraschall-Sensoren ebenfalls in einem geschlossenen Gehäuse angeordnet sind, das durch eine radiale Ausnehmung hindurch in einen Messkanal eintaucht. Diese eintauchenden Bereiche stören wiederum die Durchströmung des Messkanals. Des Weiteren dienen diese in das Innere des Messkanals eintauchenden Bereiche des Gehäuses dazu, einen in den Messkanal eingesetzten Messeinsatz festzulegen. Dieser Messeinsatz trägt Reflektoren zur Umlenkung der Messstrahlen. Ähnlich wie bei den vorbeschriebenen Lösungen müssen der Messkanal und der Messeinsatz so auf einander abgestimmt sein, dass das axiale, stirnseitige Einsetzen des Messeinsatzes ermöglicht ist.

Das europäische Patent EP 1 544 582 B1 betrifft einen Durchflussmesser, bei dem ebenfalls ein Messeinsatz in Axialrichtung in einen Messkanal eingesetzt wird. Des Weiteren ist vorausgesetzt, dass der Querschnitt des Messkanals sechseckig, achteckig oder im Wesentlichen in Form eines Quadrats mit verrundeten Ecken ausgebildet ist. Auch ein derartiger Messeinsatz ist nur mit einem erheblichen vorrichtungstechnischen Aufwand realisierbar.

Weiterer Stand der Technik mit Bezug zum vorstehend beschriebenen technischen Gebiet ist aus der CN 2 16 385 833 U bekannt.

Demgegenüber liegt der Erfindung die Aufgabe zugrunde, den Durchflussmesser im Hinblick auf eine weitere Verringerung des montage- und vorrichtungstechnischen Aufwands bei optimaler Messgenauigkeit weiterzubilden.

Diese Aufgabe wird durch einen Durchflussmesser mit den Merkmalen des Patentanspruches 1 gelöst.

Vorteilhafte Weiterbildungen der Erfindung sind Gegenstand der Unteransprüche.

Der erfindungsgemäße Durchflussmesser hat einen Strömungskanal-Körper - im Folgenden Körper/Body genannt, an dem eine Messeinheit gehalten ist. Diese hat zumindest zwei zueinander beabstandete Sensoren, die beispielsweise als Ultraschall-Wandler ausgeführt sind. Deren Messsignale werden durch zumindest eine Ausnehmung des Körpers hindurch ein- bzw. ausgekoppelt. Der Durchflussmesser hat des Weiteren eine in einem Steuergehäuse aufgenommene Steuereinheit zur Ansteuerung der Sensoren und zur Verarbeitung dieser Messsignale, wobei im Körper ein Messkanal zumindest abschnittsweise durch einen Messkanaleinsatz gebildet ist, der zumindest teilweise einen Messkanalabschnitt begrenzt und der durch die genannte Ausnehmung hindurch in Radialrichtung eingesetzt ist. Der erfindungsgemäße Durchflussmesser ist des Weiteren mit einem Einlass- und einem Auslass-Insert ausgeführt, die durch einen Fluideinlass bzw. durch einen Fluidauslass des Körpers hindurch eingesetzt sind, wobei diese Inserts derart ausgelegt sind, dass sie durch das daran anschließende Einsetzen des Messkanaleinsatzes im Körper lagefixiert sind und dabei vorzugsweise an einer Anschlagwandung des Körpers anliegen.

Mit einem derartigen Konzept, bei dem die Inserts in Axialrichtung und der Messkanaleinsatz in Radialrichtung eingesetzt werden und zudem durch das Einsetzen des Messkanaleinsatzes die Inserts im Körper lagefixiert sind, kann der Durchflussmesser mit einem sehr geringen Bauvolumen ausgeführt werden, wobei die Montage durch die Lagefixierung der Inserts über den Messkanaleinsatz sehr einfach und mit hoher Präzision durchgeführt werden kann.

Bei einem bevorzugten Ausführungsbeispiel der Erfindung ist die Anschlagwandung durch zumindest eine Radialstufe eines Kanals des Körpers ausgebildet, durch die die lichte Weite des Kanals zur Aufnahme des Messkanaleinsatzes verringert ist. Dementsprechend ist durch eine derartige Ausgestaltung der Außendurchmesser des Inserts in diesem Bereich größer als die lichte Weite des Kanals.

Bei einer Variante der Erfindung ist das Insert mit einem hohlen Grundkörper ausgeführt, dessen Innenumfang einen Strömungsquerschnitt begrenzt, der messkanaleinsatzseitig etwa als längliches oder verrundetes, im weitesten Sinn rechteckiges Profil ausgeführt ist, wobei aus dem Grundkörper stirnseitig zum Messkanaleinsatz hin ein Arretierhaken auskragt, der zur Lagefixierung von einer Fixierrippe des Messkanaleinsatzes hintergriffen ist. Dabei ist es besonders bevorzugt, wenn der Arretierhaken rückseitig an einer Nutwandung abgestützt ist. Durch dieses Hintergreifen und rückseitige Abstützen wird jedes Insert jeweils in Radialrichtung und in Axialrichtung fixiert, so dass eine sehr präzise Relativpositionierung des Messkanaleinsatzes mit Bezug zu den beiden Inserts gewährleistet ist.

Besonders vorteilhaft ist es, wenn der Grundkörper zum Messkanaleinsatz hin abschnittsweise verjüngt ist, so dass die messkanaleinsatzseitige, vorzugsweise längliche, Stirnfläche kleiner als die davon entfernte etwa kreisförmige Stirnfläche des Grundkörpers ist.

Die Herstellung des Inserts und dessen Stabilität ist weiter optimiert, wenn der Arretierhaken im Bereich einer stirnseitig aus dem Grundkörper auskragenden Wange ausgebildet ist, die vorzugsweise durch eine Wangennut freigeschnitten ist.

Die Verriegelung/Arretierung des Inserts ist besonders exakt, wenn am Arretierhaken eine schräg zur Radialrichtung angestellte Verriegelungsfläche vorgesehen ist, die mit einer entsprechenden Schrägfläche der Fixiernase in Wirkeingriff steht.

Die Arretierung der Inserts ist weiter vereinfacht, wenn der Arretierhaken in Einsetzrichtung des Messkanaleinsatzes unterhalb einer Mittelebene des Inserts bzw. des Messkanals angeordnet ist.

Vorteilhafterweise können Wangenbereiche durch Rippen oder dergleichen verstärkt werden können.

Die Abstützung der Inserts ist weiter verbessert, wenn die messkanaleinsatzseitige Stirnfläche derart geneigt ist, dass die Länge des Inserts messkanaleinsatzseitig geringer als dessen Axiallänge ist.

Bei einem bevorzugten Ausführungsbeispiel der Erfindung ist der Messkanaleinsatz mehrteilig mit beispielsweise einem Messkanaloberteil und einem Messkanalunterteil ausgeführt, wobei vorzugsweise das Messkanaloberteil und das Messkanalunterteil an einen Boden des Steuergehäuses angesetzt sind und mit diesem den Messkanalabschnitt umfangsseitig begrenzen.

Die Herstellung eines derartigen Messkanaleinsatzes ist besonders einfach, wenn am Messkanaloberteil und/oder am Messkanalunterteil zumindest ein Reflektor, vorzugsweise stoffschlüssig, gehalten ist. Diese stoffschlüssige Verbindung kann beispielsweise durch Spritzgießen oder durch Ultraschallschweißen erfolgen.

Die Montage des Durchflussmessers ist weiter vereinfacht, wenn das Messkanaloberteil, das Messkanalunterteil und vorzugsweise zumindest ein Teil des Steuergehäuses vor dem radialen Einsetzen in den Körper stoffschlüssig verbunden sind. Dieser Stoffschluss kann ebenfalls wieder durch Spritzgießen oder Ultraschallschweißen, Kleben, etc. erfolgen.

Der üblicherweise als Gussbody ausgeführte Körper ist besonders kompakt ausgebildet, wenn seitlich im Bereich des Messkanalabschnittes parallele Abflachungen vorgesehen sind, deren Abstand entsprechend des Messkanalprofils ausgelegt ist.

Wie vorstehend erläutert, ist dieses Messkanalprofil vorzugsweise als längliches oder - vorzugsweise verrundetes - Rechteckprofil ausgeführt, wobei die längere Achse in Radialrichtung, d.h. in Einsetzrichtung des Messkanaleinsatzes verläuft.

Bei einem Ausführungsbeispiel der Erfindung sind der Strömungskanal-Körper und der Messkanaleinsatz mit dem Steuergehäuse formschlüssig über Passstücke, Passausnehmungen, eine Bolzenverbindung oder eine Snap-Fit-Verbindung zueinander lagepositioniert.

Dabei wird es besonders bevorzugt, wenn die Verbindung zwischen dem Strömungskanal-Körper und dem Messkanaleinsatz über zwei im Parallelabstand zueinander angeordnete Verbindungsbolzen erfolgt. Diese erstrecken sich dabei vorzugsweise in etwa parallel zur Durchströmungsrichtung des Durchflussmessers.

Bei einem bevorzugten Ausführungsbeispiel sind dabei an dem Strömungskanal-Körper zumindest zwei, jeweils einem Verbindungsbolzen zugeordnete Führungslaschen ausgebildet, in die der Verbindungsbolzen eingesetzt werden kann. Messkanalseitig sind entsprechend Führungen ausgebildet, die im montierten Zustand koaxial zu den Führungslaschen 22 verlaufen, so dass die Verbindungsbolzen wechselseitig in die Führungslaschen und die Führungen eingreifen und somit die Bauelemente mit einander verbinden.

Diese Führungslaschen sind vorzugsweise an einem Flansch des Strömungskanal-Körpers ausgebildet, wobei dieser Flansch die Ausnehmung umgreift, durch die hindurch der Messkanaleinsatz eingesetzt wird.

Der fertigungstechnische Aufwand zur Herstellung des Strömungskanal-Körpers ist minimal, wenn Halteklauen der Führungslaschen einen Umfangsabschnitt des Verbindungsbolzens nicht vollständig umgreifen sondern seitlich, weg vom Strömungskanal-Körper offen sind.

Prinzipiell können diese Öffnungen der Halteklauen auch - wie beim Stand der Technik gemäß der WO 2022/079214 A1 offenbart - sich nach innen hin öffnen. Versuche zeigten jedoch, dass durch die sich nach außen hin öffnenden Halteklauen/Führungslaschen die beim Durchströmen des Durchflussmessers auftretenden Kräfte im Bereich der Verbindung zwischen Messkanaleinsatz und Strömungskanal-Körper besser als bei der bekannten Lösung aufgefangen werden können.

Die Festigkeit lässt sich noch weiter verbessern, wenn die Halteklauen den Verbindungsbolzen entlang eines Umfangsabschnitts vollständig umgreifen - dies erfordert jedoch einen höheren fertigungstechnischen Aufwand, insbesondere dann, wenn der Strömungskanal-Körper aus Metallguss hergestellt ist.

Das Ein- und Auskoppeln der Messsignale ist besonders einfach, wenn die Sensoren auf schräg angestellten Stützflächen des Messkanaloberteils oder des Bodens des Steuergehäuses befestigt sind, wobei die Sensoren dann stoffschlüssig, vorzugsweise durch Kleben oder Vorspannung, lagefixiert sein können.

Dabei ist es besonders bevorzugt, wenn jeder Sensor mit einer Kontaktplatine kontaktiert ist, die ihrerseits über geeignete Leitungen mit einer Haupt-PCB kontaktiert ist.

Bevorzugte Ausführungsbeispiele der Erfindung werden im Folgenden anhand schematischer Zeichnungen näher erläutert. Es zeigen:
Figur 1 eine dreidimensionale Darstellung eines ersten Ausführungsbeispiels eines erfindungsgemäßen Durchflussmessers;
Figur 2 eine Explosionsdarstellung des Durchflussmessers gemäß Figur 1;
Figur 3 eine Explosionsdarstellung von in einem Steuergehäuse des Durchflussmessers gemäß den Figuren 1 und 2 aufgenommenen Komponenten;
Figur 4 eine Detaildarstellung eines Inserts aus Figur 2;
Figur 5 eine vereinfachte Schnittdarstellung des Durchflussmessers gemäß den Figuren 1 bis 4;
Figur 6 eine dreidimensionale Darstellung der Position des Inserts des Durchflussmessers gemäß den Figuren 1 bis 5;
Figuren 7 und 8 Ansichten eines weiteren Ausführungsbeispiels eines Durchflussmessers mit größerer Nennweite als das Ausführungsbeispiel gemäß den Figuren 1 bis 6;
Figur 9 eine stark vereinfachte Explosionsdarstellung des Durchflussmessers gemäß den Figuren 7 und 8;
Figuren 10, 11 und 12 Schnitte des Durchflussmessers gemäß den Figuren 7 und 8;
Figur 13 eine Einzeldarstellung eines Messkanaleinsatzes mit einem Steuergehäuse des Durchflussmessers gemäß den Figuren 7 bis 12;
Figur 14 eine dreidimensionale Darstellung eines Strömungskanal-Körpers (Body) des zweiten Ausführungsbeispiels eines Durchflussmessers;
Figuren 15, 16 und 17 Schnittdarstellungen des Körpers gemäß Figur 14;
Figuren 18 und 19 vergleichende Darstellungen von erfindungsgemäßen Durchflussmessern mit unterschiedlichen Nennweiten;
Figur 20 vergleichende Darstellungen von weiteren Varianten erfindungsgemäßer Durchflussmesser mit unterschiedlichen Nennweiten;
Figur 21 eine vereinfachte Explosionsdarstellung eines weiteren Ausführungsbeispiels eines erfindungsgemäßen Durchflussmessers;
Figur 22 einen ebenfalls vereinfachten Schnitt durch den Durchflussmesser gemäß Figur 21 und
Figur 23 eine dreidimensionale Teildarstellung des Durchflussmessers gemäß den Figuren 21 und 22.

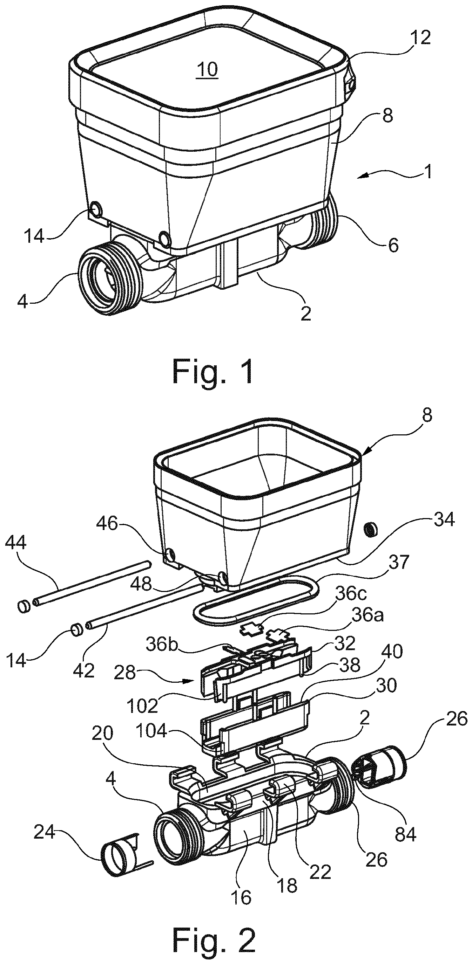

Figur 1 zeigt eine dreidimensionale Ansicht eines ersten Ausführungsbeispiels eines erfindungsgemäßen Durchflussmessers 1. Dieser hat einen Strömungskanal-Körper 2, auch Body genannt, der über zwei Anschlussstutzen 4, 6 an eine Rohrleitung anschließbar ist, um den Volumenstrom oder die Strömungsgeschwindigkeit des diese Rohrleitung durchströmenden Fluids zu erfassen. Der Strömungskanal-Körper 2 - im Folgenden verkürzt Körper 2 genannt - ist üblicherweise aus einem Gussmaterial, vorzugsweise aus Messing hergestellt. An den Körper 2 ist ein Steuergehäuse 8 angesetzt, in dem, wie im Folgenden noch näher ausgeführt wird, beispielsweise zwei als Ultraschallwandler ausgeführte Sensoren und die Steuerelektronik zur Ansteuerung dieser Sensoren und zur Auswertung der Messsignale dieser Sensoren angeordnet sind. Das Steuergehäuse 8 ist in der Ansicht nach Figur 1 nach oben hin über ein Abdeckglas 10 verschlossen, das eine EDU (Electronic Display Unit) überdeckt. Die Befestigung des Abdeckglases 10 an dem Steuergehäuse 8 erfolgt dabei über einen Spannrahmen 12. Wie in Figur 1 dargestellt, sind die Anschlussstutzen 4, 6 mit einem Außengewinde versehen, über das eine fluiddichte Verbindung mit der genannten Rohrleitung ermöglicht ist. Wie im Folgenden noch näher erläutert wird, sind das Steuergehäuse 8 und sonstige Komponenten des Durchflussmessers 1 über zwei parallel angeordnete Verbindungsbolzen mit dem Körper 2 verbunden. In der Darstellung gemäß Figur 1 sind diese Verbindungsbolzen von Abdeckungen 14 überdeckt.

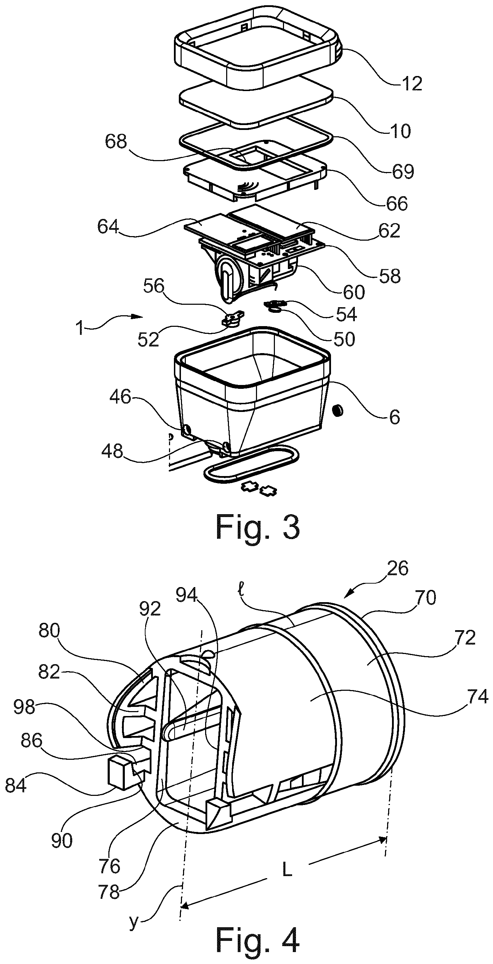

Figur 2 zeigt eine Explosionsdarstellung des Durchflussmessers 1, wobei die im Steuergehäuse 8 aufgenommenen Komponenten später anhand Figur 3 erläutert werden.

Gemäß der Darstellung in Figur 2 hat der beispielsweise aus Messing hergestellte Körper 2 ein Kanalgehäuse 16, an dessen seitliche Stirnwandungen die beiden Anschlussstutzen 4, 6 angesetzt sind. Das Kanalgehäuse 16 ist zum Steuergehäuse 8 hin mit einem Flansch 18 ausgeführt, der eine Ausnehmung 20 umgreift, die sich im Bereich zwischen den beiden Anschlussstutzen 4, 6 erstreckt und das Innere des Kanalgehäuses 16 zugänglich macht. An dem Flansch 18 sind beim dargestellten Ausführungsbeispiel sechs Führungslaschen 22 vorgesehen, in die die genannten Verbindungsbolzen 42, 44 eingesetzt werden können. Fluideinlass- und fluidauslassseitig sind in die Anschlussstutzen 4, 6 jeweils ein Insert 24, 26 eingesetzt, die beide im Wesentlichen den gleichen Aufbau haben, der im Folgenden anhand Figur 4 erläutert wird.

Der erfindungsgemäße Durchflussmesser 1 ist des Weiteren mit einem mehrteiligen Messkanaleinsatz 28 ausgebildet, der im Wesentlichen durch ein Messkanalunterteil 30, ein Messkanaloberteil 32 und einen Gehäuseboden 34 des Steuergehäuses 8 ausgebildet ist. Der prinzipielle Aufbau dieses Messkanaleinsatzes 28 und auch des Steuergehäuses 8 ist in der eingangs genannten WO 2022/079 213 A1 der Anmelderin erläutert, so dass hier nur die zum Verständnis der Erfindung wesentlichen Elemente beschrieben werden und im Übrigen auf die Offenbarung der oben genannten Druckschrift verwiesen werden kann.

Bei dem dargestellten Ausführungsbeispiel sind das Messkanalunterteil 30, das Messkanaloberteil 32 und der Gehäuseboden 34 über geeignete Passelemente präzise und mit hoher Festigkeit zusammengefügt, so dass im zusammengesetzten Zustand ein Messkanal mit einem definierten Querschnitt und einem vorgegebenen Profil mit kontinuierlichen Übergängen und im Wesentlichen ohne Taschen, Hinterschneidungen oder sonstigen Hindernissen ausgebildet wird und eine Messung mit optimaler Signalqualität bei hoher Signalstärke ohne Signalrauschen und ohne Interferenzen ermöglicht. Dementsprechend zeichnet sich der erfindungsgemäße, im Folgenden noch näher erläuterte Durchflussmesser durch einen sehr guten Gearing-Faktor aus. Dieser Faktor steht für die Erhöhung des Durchflusses in Liter in einer Zeitdifferenz T, wobei ein hoher Gearing-Faktor bedeutet, dass man für eine Messung eine höhere Repetierbarkeit als bei einem niedrigeren Wert erhält, so dass bei niedrigen Strömungsgeschwindigkeiten ein Signalrauschen verringert oder zumindest kompensiert wird.

Wie im Folgenden erläutert, sind im Steuergehäuse 8 beim dargestellten Ausführungsbeispiel zwei Sensoren angeordnet, die zur Achse des Messkanals schräg angestellt sind, wobei deren Messsignale über drei in den Messkanaleinsatz 28 integrierte Reflektoren 36 reflektiert werden. Zwei dieser Reflektoren 36a, 36b sind dabei im Messkanalunterteil 30 aufgenommen. Der dritte Reflektor 36c ist etwa mittig im Messkanaloberteil 32 positioniert, so dass sich ein W-förmiger Signalpfad ergibt.

Zur Abdichtung zwischen dem Messkanaloberteil 32/Messkanalunterteil 30 einerseits und dem Gehäuseboden 34 andererseits ist eine O-Ring-Dichtung 37 vorgesehen. Zur Montage werden das Messkanalunterteil 30, das Messkanaloberteil 32 und das Steuergehäuse 8 entlang des Gehäusebodens 34 mit einander verbunden, wobei die Relativposition über die genannten Passelemente vorgegeben ist, von denen beispielhaft in Figur 2 zwei komplementäre Passelemente 38, 40 mit einem Bezugszeichen versehen sind.

Die Befestigung der Reflektoren 36 erfolgt beim dargestellten Ausführungsbeispiel vorzugsweise dadurch, dass diese beim Spritzgießen des Messkanalunterteils 30 bzw. des Messkanaloberteils 32 in das Werkzeug eingelegt und somit umspritzt werden. Selbstverständlich kann auch eine stoffschlüssige Verbindung durch Verkleben oder Verschweißen erfolgen.

Prinzipiell ist es auch möglich, die Komponenten des Messkanaleinsatzes 28 stoffschlüssig durch Ultraschallschweißen oder dergleichen zu verbinden. Auch eine Herstellung im Spritzgießverfahren ist möglich, wobei ein mehrstufiger Spritzgießvorgang oder ein Mehrkomponenten-Spritzgießen vorteilhaft ist.

Bei der Montage werden die in der vorbeschriebenen Weise zusammengefügten Komponenten des Messkanaleinsatzes 28 in Radialrichtung durch die Ausnehmung 20 hindurch eingesetzt, wobei in einem vorhergehenden Arbeitsgang zunächst die Inserts 24, 26 in die Anschlussstutzen 4, 6 eingebracht werden, so dass durch das radiale Einsetzen des Messkanaleinsatzes 28 die beiden Inserts 24, 26 lagefixiert sind.

In Figur 2 ist das Steuergehäuse 8 ohne die integrierten Komponenten und ohne Abdeckglas 10 und Spannrahmen 12 dargestellt. Man erkennt die beiden Verbindungsbolzen 42, 44, die in Führungen 46, 48 des Gehäusebodens 34 eingesetzt werden und dabei auch jeweils die koaxial hintereinander liegenden Führungslaschen 22 durchsetzen, so dass eine passgenaue Verbindung des Steuergehäuses 8 mit dem Körper 2 vorliegt. Nach dem Einsetzen der Verbindungsbolzen 42, 44 werden dann die Abdeckungen 14 in die Führungen 46, 48 eingesetzt, so dass diese nach außen hin verschlossen sind.

Die im Steuergehäuse 8 aufgenommenen Komponenten werden anhand Figur 3 erläutert. Wie vorstehend erläutert, ist das beschriebene Ausführungsbeispiel eines Durchflussmessers 1 mit zwei Sensoren 50, 52 ausgeführt, denen jeweils eine Kontaktplatine 54, 56 zugeordnet ist, die über geeignete Signal-/Stromversorgungsleitungen mit einer Hauptplatine 58 kontaktiert sind. Diese ist Teil einer Steuerelektronik, die beispielsweise über eine Batterie 60 oder eine sonstige Energiequelle mit Energie versorgt wird. Beim dargestellten Ausführungsbeispiel sind auf der in Figur 3 sichtbaren Oberseite der Hauptplatine 58 die EDU 62 mit dem Display und ein Kommunikationsmodul 64 angeordnet, über das Messsignale an eine Zentralstation weitergeleitet oder Steuersignale empfangen werden können.

Das Kommunikationsmodul 64 und die EDU 62 sind von einem Gehäusedeckel 66 überdeckt, der ein Fenster 68 zum Ablesen des Displays aufweist. Auf dem Gehäusedeckel 66 ist dann über eine weitere Dichtung 69 das Abdeckglas 10 abgestützt, wobei die Fixierung dieser den Gehäuseabschluss bildenden Komponenten über den Spannrahmen 12 erfolgt. Dieser Aufbau des Steuergehäuses 8 mit der darin integrierten Elektronik entspricht weitestgehend dem Aufbau der in der WO 2022/079 213 A1 beschriebenen Komponenten.

Figur 4 zeigt eine Einzeldarstellung des abströmseitigen Outlet-Inserts 26, das im Prinzip den gleichen Aufbau wie das Inlet-Insert 24 hat. Dementsprechend hat das Insert 26 einen Grundkörper 70, der einen etwa zylinderförmigen Mantelabschnitt 72 hat, an den sich ein zum Messkanaleinsatz 28 hin konvergierender Abschnitt 74 anschließt, durch den der im Bereich des Mantelabschnittes 72 kreisförmige Strömungsquerschnitt zu einem verengten Querschnitt, im vorliegenden Fall zu einem etwa rechteckförmigen Querschnitt verringert wird, so dass die Strömungsgeschwindigkeit im Anschlussstutzen 6 zum Fluidaustritt hin verringert ist. Wie erwähnt, ist das messkanaleinsatzseitige Profil 76 des Inserts 26 in etwa rechteckförmig ausgebildet, wobei die Längsachse Y etwa in Radialrichtung (d.h. etwa parallel zur Einschubrichtung des Messkanaleinsatzes 28) verläuft. Die gegenüber der rückseitigen Stirnfläche des Grundkörpers 70 verjüngte Stirnfläche 78 ist etwas zur Vertikalen geneigt, so dass die Länge I des Inserts 26 an der Oberseite (Ansicht nach Figur 4) etwas geringer ist als die in Figur 4 untere Länge L, so dass entsprechend die Achse Y des Profils 76 gegenüber der Vertikalen in Figur 4 nach rechts gekippt/geneigt ist. Dies wird später noch verdeutlicht.

Wie vorstehend erläutert, wird die aus dem Messkanaleinsatz 28 in das Outlet-Insert 26 eintretende Fluidströmung durch die Erweiterung des Strömungsquerschnittes verlangsamt und somit vergleichmäßigt. In entsprechender Weise wird die in den Durchflussmesser 1 eintretende Strömung durch das sich zum Messkanaleinsatz 28 hin verjüngende Inlet-Insert 24 beschleunigt.

In etwa parallel zur Hochachse Y des Profils 76 ist an der Stirnfläche 78 eine etwa achsparallel aus dieser auskragende Wange 80 ausgebildet, deren Stirnkante, wie in Figur 4 dargestellt, verrundet ist. Diese im Außenumfang sich etwas auswölbende Wange 80 ist über Streben 82 an der verjüngten Stirnfläche 78 abgestützt. Unterhalb der Wange 80 ist ein Arretierhaken 84 vorgesehen, der ebenfalls aus der Stirnfläche 78 in Richtung zum Messkanaleinsatz 28 hin auskragt. Wie in Figur 4 erkennbar, hat der Arretierhaken 84 eine Basis 86, aus der ein Hakenvorsprung 88 in etwa zur Wange 80 hin auskragt. Dieser Hakenvorsprung 88 ist mit einer schräg angestellten Verriegelungsfläche 90 ausgebildet, durch die der Hakenvorsprung 88 in Richtung zur Wange 80 hin verjüngt ist.

Wie in Figur 4 weiter sichtbar ist, sind in dem Innenraum der Inserts 24, 26 jeweils Leitrippen 92, 94 vorgesehen, die zur Strömungsvergleichmäßigung beitragen.

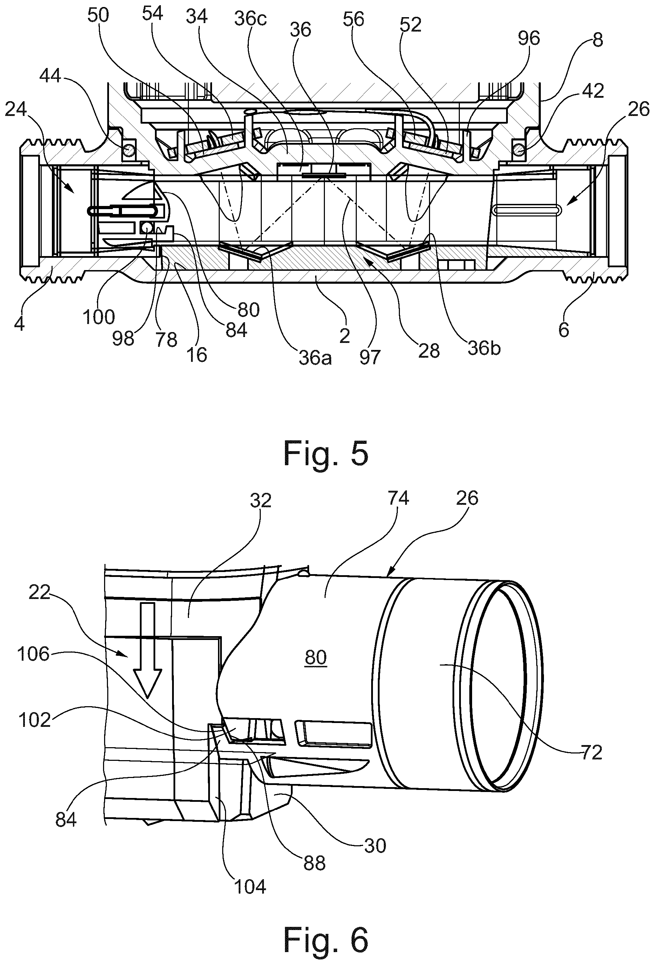

Figur 5 zeigt eine geschnittene Teildarstellung des Durchflussmessers 1 mit einem Teil des Steuergehäuses 8, das über die Verbindungsbolzen 42, 44 mit dem Körper 2 verbunden ist. Der Messkanaleinsatz 28 mit den drei Reflektoren 36a, 36b, 36c ist dabei in Radialrichtung in das Kanalgehäuse 16 eingesetzt. Wie erläutert, sind auf dem Gehäuseboden 34 die beiden Sensoren 50, 52 und die zugeordneten Kontaktplatinen 54, 56 positioniert, wobei dies über die Kontaktplatinen 54, 56 durchsetzende Haltestifte 96 erfolgen kann. Die Sensoren 50, 52 sind dabei stoffschlüssig mit den Kontaktplatinen 54, 56 verbunden. Aufgrund der Schrägstellung der Sensoren 50, 52 ergibt sich dann der eingangs erläuterte W-förmige Signalpfad 97.

Wie vorstehend erläutert, sind in die Anschlussstutzen 4, 6 das Inlet-Insert 24 bzw. das Outlet-Insert 26 eingesetzt. Man erkennt in der Darstellung links den seitlich aus der geneigten Stirnfläche 78 auskragenden Arretierhaken 84, der im Abstand unterhalb der Wange 80 positioniert ist. In dieser Darstellung sieht man auch recht deutlich, dass der Arretierhaken 84 über eine Wangennut 98 von der Wange 80 beabstandet ist.

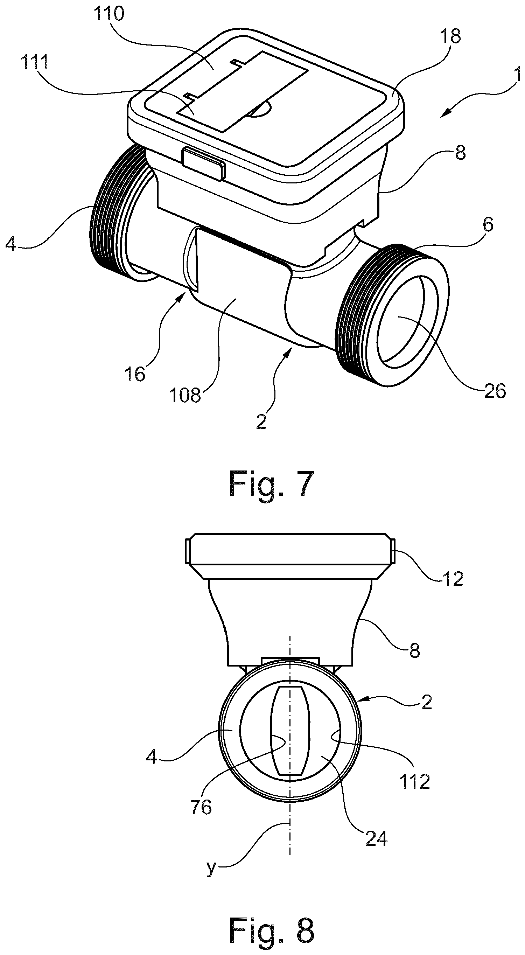

Die Lagefixierung und Verriegelung der Inserts 24, 26 erfolgt über den Messkanaleinsatz 28, der nach dem axialen Einschieben der Inserts 24, 26 in Radialrichtung eingesetzt wird. Diese Lagefixierung wird anhand Figur 6 erläutert, in der lediglich ein Teil des Messkanaleinsatzes 28 und das damit in Arretiereingriff stehende Outlet-Insert 26 dargestellt sind. Wie erläutert, werden die beiden Inserts 24, 26 zunächst in Axialrichtung eingesetzt und dann der mehrteilige Messkanaleinsatz 28 in Radialrichtung durch die Ausnehmung 20 hindurch eingeführt. Wie auch Figur 2 entnehmbar ist, hat das mit dem Messkanalunterteil 30 verbundene Messkanaloberteil 32 an den zu den Inserts 24, 26 weisenden Endabschnitten seitlich vorspringende Fixierrippen 102, die beim Einschieben des Messkanaleinsatzes 28 (siehe Pfeilrichtung in Figur 7) innerhalb der Wange 80 des jeweiligen Inserts 26 eintauchen und schließlich in Anlage an den Arretierhaken 84 gelangen, so dass dieser von der Fixierrippe 102 hintergriffen ist und somit eine zuverlässige Lagefixierung in Axial- und in Radialrichtung erzielt wird. Wie in Figur 6 dargestellt, liegt die Verriegelungsfläche 90 dabei an einer Schrägfläche 106 der Fixierrippe 102 an. Die Axialposition wird zusätzlich durch die Anlage der Rückseite des Hakenvorsprungs 88 an eine Nutwandung 104 des Messkanalunterteils 30 unterstützt.

Die Arretierung des Inlet-Inserts 24 erfolgt in entsprechender Weise.

Figur 7 zeigt eine dreidimensionale Darstellung eines Ausführungsbeispiels eines Durchflussmessers 1, der mit einer größeren Nennweite als derjenige des zuvor beschriebenen Ausführungsbeispiels ausgeführt ist. Der in Figur 8 dargestellte Durchflussmesser 1 hat wiederum einen Strömungskanal-Körper 2 mit zwei Anschlussstutzen 4, 6, in die ein Inlet-Insert 24 und ein Outlet-Insert 26 eingesetzt sind, wobei in der Darstellung gemäß Figur 7 lediglich das Outlet-Insert 26 abschnittsweise sichtbar ist. Aufgrund der größeren Nennweite steht im Bereich des Kanalgehäuses 16 mehr Volumen zur Aufnahme des Messkanaleinsatzes 28 als beim zuvor beschriebenen Ausführungsbeispiel zur Verfügung, so dass zur Verringerung des Gewichts und zur Materialeinsparung und natürlich auch zur Verringerung des Totvolumens seitlich am Kanalgehäuse 16 zwei parallele Abflachungen 108 ausgebildet sind (rückseitige nicht sichtbar in Figur 8). Diese beiden Abflachungen 108 verlaufen etwa senkrecht zu dem in Figur 8 nicht sichtbaren Flansch 18, auf den der Messkanaleinsatz 28 und das Steuergehäuse 8 aufgesetzt sind. Über den Spannrahmen 12 ist auf dem Steuergehäuse 8 eine Gehäuseabdeckung 110 mit einer Klappe 111 positioniert, die geöffnet werden kann, um das Display der EDU 62 ablesen zu können.

Figur 8 zeigt eine Vorderansicht des Durchflussmessers gemäß Figur 7. In dieser Darstellung sieht man das Inlet-Insert 24, über das der etwa kreisförmige Eingangsquerschnitt 112 zu einem wesentlich kleineren, weitestgehend elliptisch oder verrrundet rechteckförmig ausgebildeten Messkanalquerschnitt verjüngt wird, dessen Hochachse Y in Figur 8 in der Vertikalen verläuft. Dieser Querschnitt entspricht dem ausgangsseitigen Öffnungs-Profil 76 des Inserts 24 und somit dem Querschnitt des Messkanals.

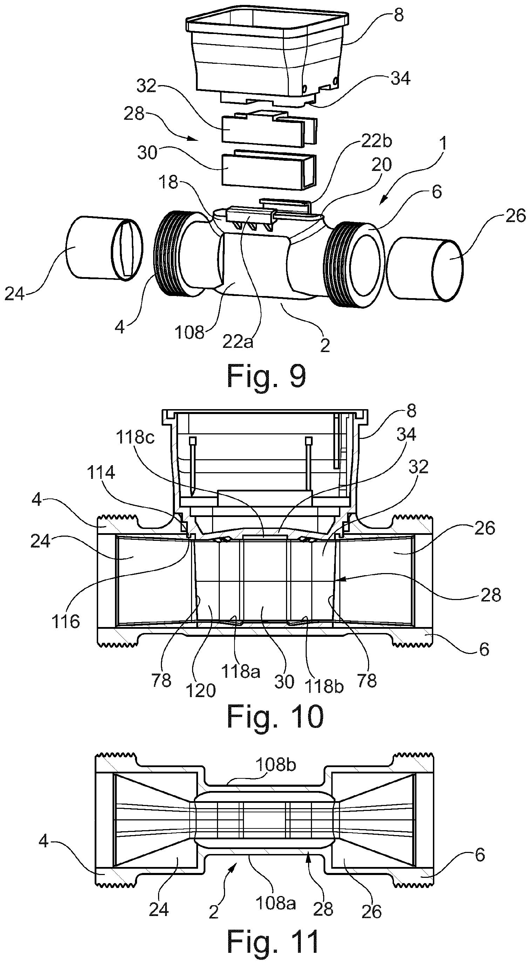

Figur 9 zeigt eine stark vereinfachte Explosionsdarstellung des Durchflussmessers 1 gemäß den Figuren 7 und 8, wobei lediglich der vorzugsweise aus Messing gefertigte Körper 2 mit den beiden Anschlussstutzen 4, 6 und den beiden Inserts 24, 26 dargestellt ist. Der Körper 2 hat wiederum oben liegend (Ansicht nach Figur 9) einen Flansch 18, in dem die Ausnehmung 20 ausgebildet ist. In diese werden in Radialrichtung der Messkanaleinsatz 28 mit dem Messkanalunterteil 30, dem Messkanaloberteil 32 und dem Gehäuseboden 34 des Steuergehäuses 8 eingesetzt, wobei letzteres dann auf dem Flansch 18 aufsitzt und durch Einschieben der beiden nicht dargestellten Verbindungsbolzen 42, 44 lagefixiert ist. Körperseitig sind hierfür am Flansch 18 lediglich zwei Führungslaschen 22a, 22b vorgesehen, die allerdings eine wesentlich größere Axiallänge als die sechs Führungslaschen 22 des oben beschriebenen Ausführungsbeispiels haben, so dass eine exakte Fixierung des Steuergehäuses 8 und des Messkanaleinsatzes 28 gewährleistet ist. Die beiden Inserts 24, 26 und auch der Messkanaleinsatz 28 sind vereinfacht, mit weniger Details als beim vorbeschriebenen Ausführungsbeispiel dargestellt.

Figur 10 zeigt eine geschnittene Seitenansicht und Figur 11 eine geschnittene Draufsicht des Durchflussmessers 1 gemäß den Figuren 7 bis 9. In der geschnittenen Seitenansicht erkennt man den mehrteiligen Messkanaleinsatz 28 mit dem Messkanalunterteil 30 und dem Messkanaloberteil 32, die sich gemeinsam mit dem Gehäuseboden 34 des Steuergehäuses 8 zum Messkanal 120 ergänzen.

Die beiden stark vereinfacht dargestellten Inserts 24, 26 sind vor dem radialen Einsetzen des Messkanaleinsatzes 28 bereits in Axialrichtung in die beiden Anschlussstutzen 4, 6 eingesetzt, wobei die axiale und radiale Fixierung in der Darstellung gemäß Figur 11 auch durch das Eintauchen eines Vorsprungs 114 des Gehäusebodens 34 in eine Ausnehmung 116 des jeweiligen Inserts 24, 26 (hier nur das Insert 24 mit dem Bezugszeichen 116 versehen) erfolgt. Die Lagefixierung des Inserts 26 erfolgt in entsprechender Weise. Selbstverständlich kann zusätzlich auch eine Lagefixierung nach dem Ausführungsbeispiel gemäß den Figuren 1 bis 6 erfolgen.

In der vereinfachten Seitenansicht in Figur 10 sieht man recht deutlich die Neigung der messkanaleinsatzseitigen Stirnfläche 78 der Inserts 24, 26.

In der geschnittenen Seitenansicht sind des Weiteren noch Aufnahmen 118a, 118b im Messkanalunterteil 30 und 118c im Messkanaloberteil 32 dargestellt, in die die Reflektoren 36 eingesetzt werden.

In der Draufsicht gemäß Figur 11 erkennt man sehr gut die Verringerung des Strömungsquerschnittes innerhalb der beiden Inserts 24, 26, wobei diese Querschnittsverringerung so verläuft, dass ein kontinuierlicher Übergang in den vom Messkanaleinsatz 28 ausgebildeten Messkanal 120 erfolgt. In dieser Darstellung sind auch die beiden parallelen Abflachungen 108a, 108b, durch die das Volumen des Körpers 2 wesentlich verringert ist, zu sehen. Wie erläutert, werden auch bei diesem Ausführungsbeispiel die beiden Inserts 24, 26 durch das radiale Einsetzen des Messkanaleinsatzes 28 lagefixiert.

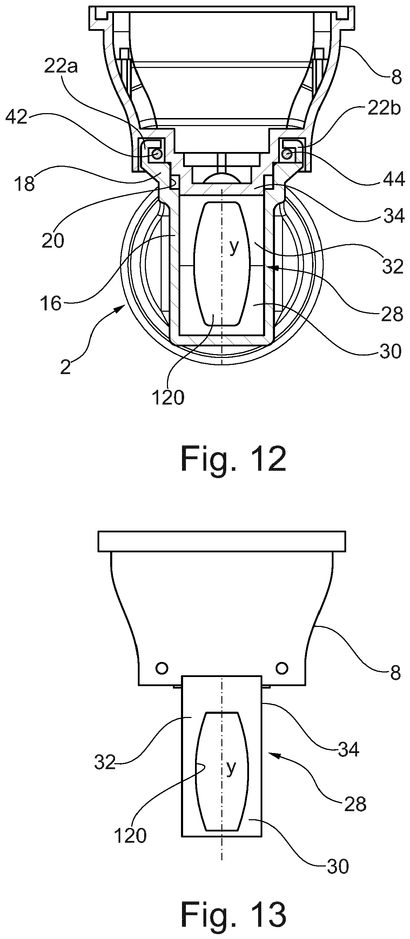

Figur 12 zeigt eine geschnittene Seitenansicht des Durchflussmessers 1, wobei ähnlich wie bei den Figuren 10, 11 die Abdeckung des Steuergehäuses 8 nicht dargestellt ist. Man sieht in dieser Darstellung den eigentlichen Messkanal 120, der durch das Messkanalunterteil 30, das Messkanaloberteil 32 und den Gehäuseboden 34 des Steuergehäuses 8 begrenzt ist. Wie erläutert, ist im Kanalgehäuse 16 des Körpers 2 die Ausnehmung 20 ausgebildet, die in dem Flansch 18 mündet, der den Gehäuseboden 34 umgreift. An dem Flansch 18 sind die beiden Führungslaschen 22a, 22b ausgebildet, die in Ausnehmungen des Gehäusebodens 34 eintauchen und die gemeinsam eine Führungsausnehmung begrenzen, in die die beiden Verbindungsbolzen 42, 44 zur Lagefixierung eingeschoben werden.

Figur 13 zeigt eine Einzeldarstellung des Messkanaleinsatzes 28 in einer Relativposition vor dem radialen Einsetzen in die Ausnehmung 20 des Körpers 2. Wie erläutert, besteht der Messkanaleinsatz 28 aus dem Messkanalunterteil 30, dem Messkanaloberteil 32 und dem Gehäuseboden 34 des Steuergehäuses 8, die gemeinsam den ovalisierten, mit einer Hochachse Y ausgebildeten Messkanal 120 begrenzen. Dabei kann der mehrteilige Messkanaleinsatz 28 über die Passelemente zusammengesteckt werden. Prinzipiell ist es jedoch auch möglich, den Messkanaleinsatz 28 ggf. mit den Reflektoren 36 durch Spritzgießen oder in sonstiger Weise stoffschlüssig auszubilden. Eine derartige stoffschlüssige Verbindung des Messkanaleinsatzes 28 und ggf. der Reflektoren 36 mit dem Messkanaleinsatz 28 hat den Vorteil, dass die erforderlichen Toleranzen wesentlich enger gehalten werden können als bei der Steckkonstruktion, so dass entsprechend der Messkanal präziser mit weniger Unregelmäßigkeiten gefertigt werden kann.

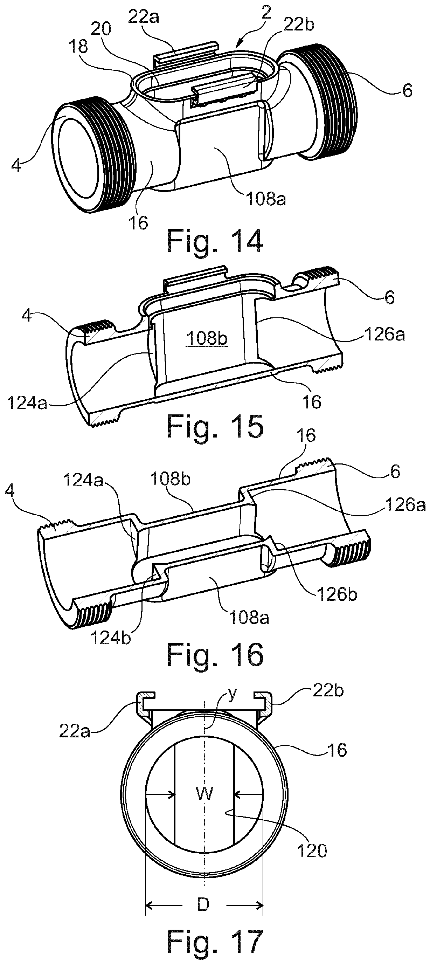

Einzelheiten des Strömungskanal-Körpers 2 werden im Folgenden anhand der Figuren 14 bis 17 erläutert. Figur 14 zeigt dabei eine dreidimensionale Einzeldarstellung des Körpers 2. Figur 15 zeigt einen Längsschnitt in der Vertikalen (bezogen auf die Ansicht in Figur 14). Figur 16 zeigt einen Horizontalschnitt und Figur 17 einen Querschnitt des Körpers 2. Der beschriebene Strömungskanal-Körper 2 hat die beiden vorgenannten Abflachungen 108a, 108b, die jeweils im Bereich des Kanalgehäuses 16 ausgebildet sind. Durch diese beiden Abflachungen wird die lichte Weite W (siehe Figur 17) des Messkanals 120 (quer zur Hochachse Y) gegenüber dem Innendurchmesser D wesentlich verringert, so dass der Messkanal 120 mit einem ebenfalls verringerten Volumen/Totvolumen ausgeführt ist und somit der Messkanaleinsatz 28 wesentlich kompakter ausgebildet werden kann. Zum Steuergehäuse 8 hin weisend ist der vorbeschriebene Flansch 18 am Kanalgehäuse 16 ausgebildet, der die Ausnehmung 20 umgreift. In Vertikalrichtung etwas versetzt zu den beiden Abflachungen 108a, 108b sind am Flansch 18 die beiden Führungslaschen 22a, 22b zur Führung der Verbindungsbolzen 42, 44 ausgebildet. Durch die beiden Abflachungen 108a, 108b werden im Übergangsbereich von den beiden Anschlussstutzen 4, 6 jeweils zu einander beabstandete Anschlagwandungen 124a, 124b bzw. 126a, 126b ausgebildet, die als Anschlag für die Inserts 24, 26 wirken, so dass die exakte Positionierung beim Einschiebevorgang vereinfacht ist.

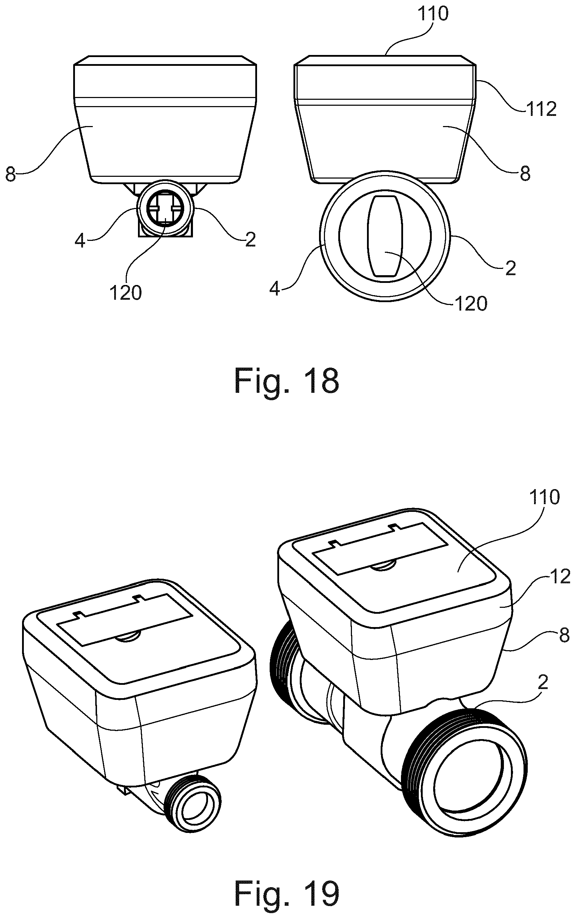

In Figur 18 sind zwei Ausführungsbeispiele von Durchflussmessern 1 mit unterschiedlichen Nennweiten gegenübergestellt. In Figur 18 links ist ein Durchflussmesser 1 mit einer Nennweite von beispielsweise DN15 dargestellt, während rechts ein Durchflussmesser 1 mit der Nennweite DN40 gezeigt ist. Aufgrund der vorbeschriebenen kompakten Ausgestaltung des Strömungskanal-Körpers 2 und des mehrteiligen oder einteiligen Messkanaleinsatzes 28 kann für beide Nennweiten im Wesentlichen ein Steuergehäuse 8 mit der gleichen Geometrie verwendet werden, wobei insbesondere die Gehäuseabdeckung 110 und der lediglich angedeutete Spannrahmen 12 bei beiden Nennweiten gleich ausgebildet sein können. Dies ergibt sich auch aus der dreidimensionalen Darstellung dieser Ausführungsbeispiel gemäß in Figur 19.

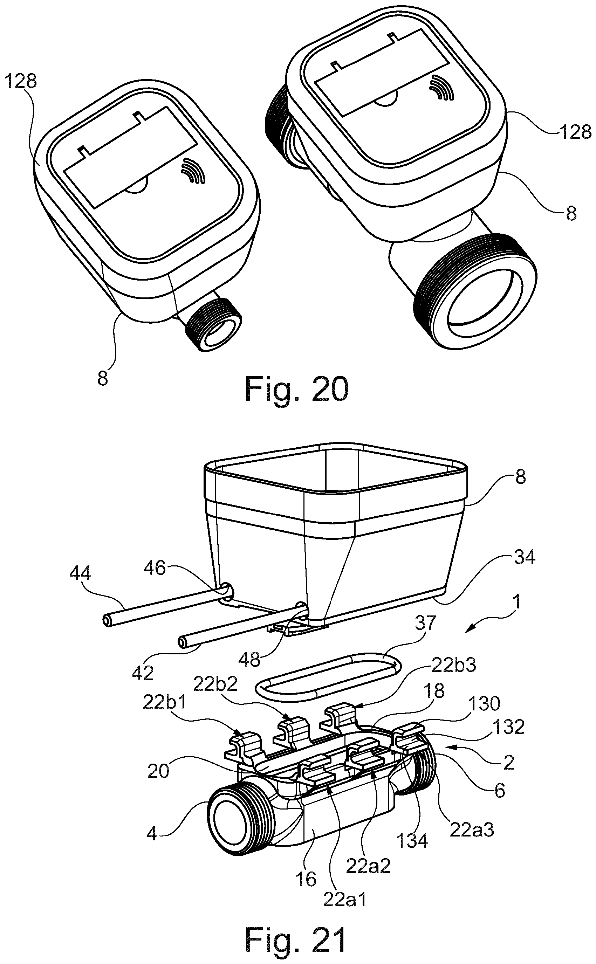

Figur 20 zeigt Varianten, bei denen das Steuergehäuse 8 jeweils mit verrundeten Eckbereichen 128 ausgebildet ist. Ein derartiges Design setzt allerdings voraus, dass die Hauptplatine 58 mit etwas geringeren Abmessungen als bei den zuvor beschriebenen Ausführungsbeispielen mit einem eher rechteckförmigen Steuergehäusequerschnitt ausgeführt wird.

Vorteilhaft bei beiden Designs ist, dass für unterschiedliche Nennweiten in etwa die gleiche Steuergehäusegeometrie verwendbar ist, so dass die Lagerhaltung vereinfacht ist.

Bei den vorstehend beschriebenen Ausführungsbeispielen erfolgt die Verbindung zwischen dem ein- oder mehrteiligen Messkanaleinsatz 28 und dem Strömungskanal-Körper 2 über die beiden Verbindungsbolzen 42, 44, die wechselweise die jeweils zugeordnete Führung 46, 48 des Steuergehäuses 8 und die Führungslaschen 22 am Flansch 18 des Körpers 2 durchsetzen. Die Führungslaschen 22 umgreifen bei diesen Ausführungsbeispielen den Verbindungsbolzen 42, 44 in Umfangsrichtung nicht vollständig sondern sind nach innen, zur Ausnehmung 20 hin offen, während die steuergehäuseseitigen Führungen 46, 48 die Verbindungsbolzen 42 bzw. 44 jeweils umfangsseitig umgreifen.

Insbesondere bei der Durchströmung des Durchflussmessers mit einem mit hohem Druck beaufschlagten Fluid werden diese Verbindungsbereiche zwischen dem Steuergehäuse 8 und dem Körper 2 mit Kräften beaufschlagt, die bei nicht hinreichender Auslegung dazu führen können, dass der Gehäuseboden 34 des Steuergehäuses 8 sich aufwölbt und entsprechend die Verriegelungselemente erheblichen Kräften ausgesetzt sind. Bei Versuchen zeigte es sich überraschender Weise, dass diese Kräfte besser aufgefangen werden können, wenn sich die genannten Führungslaschen 22 nach außen, d.h. weg vom Flansch 18 bzw. vom Körper 2 öffnen. Ein derartiges Ausführungsbeispiel wird anhand der Figuren 21 bis 23 erläutert.

Figur 21 zeigt eine stark vereinfachte Explosionsdarstellung wesentlicher Bauelemente eines weiteren Ausführungsbeispiels eines erfindungsgemäßen Durchflussmessers 1. Wie erläutert, hat dieser einen aus Messing oder einem sonstigen Gussmaterial hergestellten Strömungskanal-Körper 2 mit den beiden Anschlussstutzen 4, 6 und dem Flansch 18, der die im Innenraum des Kanalgehäuses 16 mündende Ausnehmung 20 umgreift. Ähnlich wie beim Ausführungsbeispiel gemäß Figur 2 sind am Flansch 18 beidseitig jeweils drei koaxial zu einander angeordnete Führungslaschen 22a1, 22a2, 22a3 bzw. 22b1, 22b2, 22b3 ausgebildet, die jeweils eine Halteklaue 130 (lediglich eine in Figur 21 mit einem Bezugszeichen versehen) aufweisen. Diese umgreifen einen Umfangsbereich des Verbindungsbolzens 42, 44, wenn dieser eingesetzt ist. Jede Halteklaue 130 hat dabei vorzugsweise einen umfangsseitig etwas vertieften Klauenabschnitt 132, der mit einer Gleit- oder Presspassung mit Bezug zum Außenumfang des Verbindungsbolzens 42, 44 ausgeführt ist, so dass dieser spielfrei in den Halteklauen 130 aufgenommen ist. Der Klauenabschnitt 132 öffnet sich nach außen hin (weg vom Kanalgehäuse 16) über eine Klauenöffnung 134, deren lichte Weite vorzugsweise gleich dem oder etwas geringer als der Außendurchmesser der Verbindungsbolzen 42, 44 ist. Dadurch ist eine zuverlässige Führung der Verbindungsbolzen 42, 44 innerhalb der sich nach außen öffnenden Halteklauen 130 gewährleistet. Bei den zuvor beschriebenen Ausführungsbeispielen sind diese Klauenöffnungen 134 jeweils nach innen, hin zur Ausnehmung 20 öffnend ausgebildet.

Jede der Halteklauen 130 taucht in Gehäuseaussparungen am Gehäuseboden 34 ein, die im Folgenden noch näher erläutert werden. Wie erwähnt, sind am Steuergehäuse 8 die Führungen 46, 48 ausgebildet, die bei ein- bzw. aufgesetztem Steuergehäuse 8/Messkanaleinsatz 28 koaxial zu den Klauenabschnitten 132 verlaufen. Die Abdichtung zwischen dem Steuergehäuse 8 und dem Körper 2 erfolgt - wie bei den oben beschriebenen Ausführungsbeispielen - über eine O-Ring-Dichtung 37.

Die Festigkeit der Verbindung zwischen dem Steuergehäuse 8 und dem Körper 2 lässt sich - wie vorstehend erwähnt - noch weiter verbessern, wenn keine Klauenöffnung 134 vorgesehen ist, so dass die Halteklauen 130 jeweils einen Umfangsabschnitt des zugeordneten Verbindungsbolzens 42, 44 vollständig umgreifen.

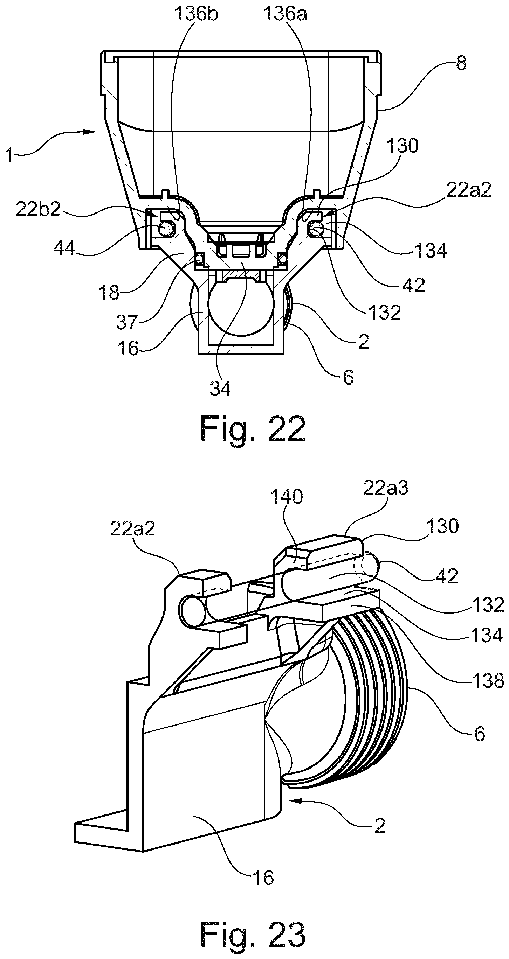

Figur 22 zeigt einen Längsschnitt durch die Anordnung gemäß Figur 21 im montierten Zustand (wobei alle vorbeschriebenen Einsätze, wie beispielsweise die Steuerelektronik, Reflektoren, Sensoren nicht dargestellt sind).

Man erkennt in dieser Darstellung den Körper 2 mit dem daran ausgebildeten, seitlich abgeflachten Kanalgehäuse 16 sowie dem Flansch 18, aus dem sich die genannten Führungslaschen 22a2, 22b2 erstrecken. In Figur 22 sieht man deutlich die Struktur der Halteklaue 130, die lediglich einen Umfangsabschnitt des jeweiligen Verbindungsbolzens 42, 44 umgreift. Jede Halteklaue 130 (in Figur 22 lediglich die Halteklaue 130 der Führungslasche 22a2 mit einem Bezugszeichen versehen) öffnet sich nach außen hin über eine Klauenöffnung 134, während der Klauenabschnitt 132 den jeweiligen Verbindungsbolzen 42, 44 abschnittsweise umgreift. Die jeweiligen Halteklauen 130 tauchen dabei in die genannten Gehäuseaussparungen 136a, 136b am Gehäuseboden 34 ein, der sich in die vom Flansch 18 umgriffene Ausnehmung 20 hinein wölbt und der über die O-Ring-Dichtung 37 mit dem Körper 2 abgedichtet ist.

Entsprechend der Anzahl der Halteklauen 130/Führungslaschen 22 sind dann am Gehäuseboden 34 entsprechende Gehäuseaussparungen 136 ausgebildet, in die jeweils eine Halteklaue 130 eintaucht. Die Seitenwandungen der Gehäuseaussparungen 136 werden dann jeweils von den die Führung 46 bzw. 48 ausbildenden Bohrungen/Durchbrüchen durchsetzt. Mit einem derartigen Konzept ist eine passgenaue und hochfeste Fxierung des Steuergehäuses 8 am Körper 2 gewährleistet.

Einzelheiten dieser Fixierung werden nochmals anhand Figur 23 erläutert. Diese zeigt eine Teilbereich des Strömungskanal-Körpers 2 mit dem abströmseitigen Anschlussstutzen 6 und zwei benachbarten Führungslaschen 22a2, 22a3. Man erkennt in dieser Darstellung deutlich die Halteklaue 130, die mit dem Klauenabschnitt 132 einen Umfangsbereich des Verbindungsbolzens 42 umgreift und die sich nach außen, zum Betrachter hin über die Klauenöffnung 134 öffnet. Dabei ist ein Auflagebereich 138 der jeweiligen Halteklaue 130 mit einer größeren Tangentiallänge als ein in Figur 23 oben liegender Deckbereich 140 ausgebildet, so dass eine zuverlässige Lagefixierung des jeweiligen Verbindungsbolzens 42, 44 gewährleistet ist. Wie oben erwähnt, können der Auflagebereich 138 und der Deckbereich 140 auch als geschlossene Struktur ausgebildet sein, die gemeinsam mit dem Klauenabschnitt 132 den Außenumfang des Verbindungsbolzens 42, 44 umgreift.

Offenbart ist ein Durchflussmesser mit einem Messkanaleinsatz, der in Radialrichtung in einen Strömungskanal-Körper eingesetzt wird, wobei zuvor in Axialrichtung ein Inlet-Insert und/oder ein Outlet-Insert eingesetzt sind.

### Bezugszeichenliste-.

- 1: Durchflussmesser
- 2: Strömungskanal-Körper
- 4: Anschlussstutzen
- 6: Anschlussstutzen
- 8: Steuergehäuse
- 10: Abdeckglas
- 12: Spannrahmen
- 14: Abdeckung
- 16: Kanalgehäuse
- 18: Flansch
- 20: Ausnehmung
- 22: Führungslasche
- 24: Insert
- 26: Insert
- 28: Messkanaleinsatz
- 30: Messkanalunterteil
- 32: Messkanaloberteil
- 34: Gehäuseboden
- 36: Reflektor
- 37: O-Ring-Dichtung
- 38: Passelement
- 40: Passelement
- 42: Verbindungsbolzen
- 44: Verbindungsbolzen
- 46: Führung
- 48: Führung
- 50: Sensoren
- 52: Sensoren
- 54: Kontaktplatine
- 56: Kontaktplatine
- 58: Hauptplatine
- 60: Batterie
- 62: EDU
- 64: Kommunikationsmodul
- 66: Gehäusedeckel
- 68: Fenster
- 69: weitere Dichtung
- 70: Grundkörper
- 72: Mantelabschnitt
- 74: konvergierender Abschnitt
- 76: Profil
- 78: Stirnfläche
- 80: Wange
- 82: Streben
- 84: Arretierhaken
- 86: Basis
- 88: Hakenvorsprung
- 90: Verriegelungsfläche
- 92: Leitrippe
- 94: Leitrippe
- 96: Fixierstift
- 97: Signalpfad
- 98: Wangennut
- 100: Dom
- 102: Fixierrippe
- 104: Nutwandung
- 106: Schrägfläche
- 108: Abflachung
- 110: Gehäuseabdeckung
- 111: Klappe
- 112: Eingangsquerschnitt
- 114: Vorsprung
- 116: Ausnehmung
- 118: Aufnahme
- 120: Messkanal
- 124: Anschlagwandung
- 126: Anschlagwandung
- 128: Eckbereich
- 130: Halteklaue
- 132: Klauenabschnitt
- 134: Klauenöffnung
- 136: Gehäuseaussparung
- 138: Auflagebereich
- 140: Deckbereich

## Patentansprüche

1. Durchflussmesser mit einem an eine von einem Fluid durchströmten Rohrleitung ansetzbaren, mit einem Fluideinlass und einem Fluidauslass ausgeführten Strömungskanal-Körper (2), an dem eine Messeinheit gehalten ist, die zumindest zwei zu einander beabstandete Sensoren (50, 52), vorzugsweise Ultraschall-Wandler, hat, die ihre Messsignale durch zumindest eine Ausnehmung (20) des Körpers (2) hindurch ein- bzw. auskoppeln, und mit einer in einem Steuergehäuse (8) aufgenommenen Steuerelektronik zur Ansteuerung der Sensoren (50, 52) und zur Verarbeitung der Messsignale, wobei im Körper (2) ein Messkanal (120) zumindest abschnittsweise durch einen ein- oder mehrteiligen Messkanaleinsatz (28) gebildet ist, der durch die Ausnehmung (20) hindurch eingesetzt ist, und mit einem Einlass- und Auslass-Insert (24, 26), die durch den Fluideinlass bzw. durch den Fluidauslass in den Körper (2) eingesetzt sind, **dadurch gekennzeichnet, dass** die Inserts (24, 26) derart gelagert sind, dass sie durch das Einsetzen des Messkanaleinsatzes (28) im Körper (2) lagefixiert sind und an einer Anschlagwandung (124, 126) des Körpers (2) anliegen.

2. Durchflussmesser nach Patentanspruch 1, wobei die Anschlagwandung (124, 126) durch zumindest eine Radialstufe am Innenumfang des Körpers (2) ausgebildet ist, durch die die lichte Weite (W) des Messkanals (120) zur Aufnahme des Messkanaleinsatzes (28) verringert ist.

3. Durchflussmesser nach einem der vorhergehenden Patentansprüche, wobei das Insert (24, 26) einen hohlen Grundkörper (70) hat, dessen Innenumfang einen Strömungsquerschnitt begrenzt, der messkanaleinsatzseitig etwa als längliches oder, vorzugsweise verrundetes, rechteckiges Profil ausgeführt ist, wobei vorzugsweise aus dem Grundkörper (70) stirnseitig zum Messkanaleinsatz (28) hin ein Arretierhaken (84) auskragt, der zur Lagefixierung von einer Fixierrippe (102) des Messkanaleinsatzes (28) hintergriffen ist.

4. Durchflussmesser nach Patentanspruch 3, wobei das Insert (24, 26) zum Messkanaleinsatz (28) hin abschnittsweise verjüngt ist, so dass die messkanaleinsatzseitige, vorzugsweise längliche, Stirnfläche (78) kleiner ist als die davon entfernte etwa kreisförmige Stirnfläche des Grundkörpers (70).

5. Durchflussmesser nach Patentanspruch 3 oder 4, wobei der Arretierhaken (84) im Bereich einer stirnseitig aus dem Grundkörper (70) auskragenden Wange (80) ausgebildet und durch eine Wangennut (98) freigeschnitten ist.

6. Durchflussmesser nach einem der Patentansprüche 3 bis 5, wobei der Arretierhaken (84) eine schräg zur Radialrichtung angestellte Verriegelungsfläche (90) hat.

7. Durchflussmesser nach einem der Patentansprüche 3 bis 6, wobei der Arretierhaken (84) in Einsetzrichtung des Messkanaleinsatzes (28) unterhalb einer Mittelebene des Inserts (24, 26) bzw. des Messkanals (120) angeordnet ist.

8. Durchflussmesser nach einem der Patentansprüche 3 bis 7, wobei an der Wange (80) Streben (82) zur Aussteifung ausgebildet sind.

9. Durchflussmesser nach einem der Patentansprüche 3 bis 8, wobei am Messkanaleinsatz (28) eine Nutwandung (104) zur rückseitigen Abstützung des Arretierhakens (84) vorgesehen ist.

10. Durchflussmesser nach einem der vorhergehenden Patentansprüche, wobei am Innenumfang der Inserts (24, 26) Leitrippen (92, 94) angeordnet sind.

11. Durchflussmesser nach einem der vorhergehenden Patentansprüche, wobei eine messkanaleinsatzseitige Stirnfläche (78) des Inserts (24, 26) geneigt ist, so dass die Insertlänge (I) messkanaleinsatzseitig geringer ist als die Axiallänge des Inserts (24, 26).

12. Durchflussmesser nach einem der vorhergehenden Patentansprüche, wobei der Messkanaleinsatz (28) mehrteilig mit einem Messkanaloberteil (32), einem Messkanalunterteil (30) ausgeführt ist, wobei vorzugsweise das Messkanaloberteil (32) und das Messkanalunterteil (30) an einem Gehäuseboden (34) des Steuergehäuses (8) angesetzt sind und mit diesem den Messkanal (120) umfangseitig begrenzen.

13. Durchflussmesser nach Patentanspruch 12, wobei am Messkanaloberteil (32) und/oder am Messkanalunterteil (30) Reflektoren (36), vorzugsweise stoffschlüssig, gehalten sind.

14. Durchflussmesser nach Patentanspruch 13, wobei das Messkanaloberteil (32), das Messkanalunterteil (30) und zumindest ein Abschnitt des Steuergehäuses (8) vor dem Einsetzen in den Körper (2) kraft- oder formschlüssig oder stoffschlüssig, vorzugsweise durch Spritzgießen oder Ultraschallschweißen, verbunden sind.

15. Durchflussmesser nach einem der vorhergehenden Patentansprüche, wobei der Körper (2) parallele Abflachungen (108) hat, deren Abstand entsprechend des Messkanalprofils ausgelegt ist.

16. Durchflussmesser nach einem der vorhergehenden Patentansprüche, wobei der Messkanaleinsatz (28) und der Strömungskanal-Körper (2) über Verbindungsbolzen (42, 44) mit einander verbunden sind, die einerseits, vorzugsweise körperseitig ausgebildete, Führungslaschen (22) und andererseits, vorzugsweise messkanaleinsatzseitig ausgebildete, Führungen (46, 48) durchsetzen, wobei die Führungslaschen (22) den Verbindungsbolzen (42, 44) zumindest abschnittsweise umgreifende Halteklauen (130) haben, die vorzugsweise vom Strömungskanal-Körper (2) weg gerichtet offen sind oder einen Abschnitt des Verbindungsbolzens (42, 44) entlang des gesamten Umfangs umgreifen.
